# EUROPÄISCHE PATENTANMELDUNG

(11) **EP 2 374 358 A2**
(43) Veröffentlichungstag der Anmeldung: **12.10.2011**
(21) Anmeldenummer: 11161389.9
(22) Anmeldetag: 06.04.2011
(51) Int. Cl.: A21C 11/00

(54) **Verfahren und Anlage zur Herstellung eines Teigrings**

(30) Priorität: 09.04.2010 DE 102010014465
(71) Anmelder: TechGenion GmbH, 63110 Rodgau (DE)
(72) Erfinder: Baumann, Franz-Josef, 64823, Groß-Umstadt (DE); Murmann, Thilo, 64839, Münster (DE); Schultheis, Michael, 63322, Rödermark (DE)
(74) Vertreter: KEIL & SCHAAFHAUSEN Patentanwälte

(57) **Zusammenfassung**

Die Erfindung betrifft ein Verfahren zur Herstellung eines Teigrings (16) aus einem Teigling (16'), wobei der Teigling (16') zwischen zwei Membranen (5, 12) in einer Form (7) mit einer ringförmigen Vertiefung (8) verdrängt wird.

## Beschreibung

Die Erfindung betrifft ein Verfahren und eine Anlage zur Herstellung eines Teigrings oder dgl. geformten Teigling aus einem bspw. kugelförmigen Teigling. Das Verfahren und die Anlage eignen sich dabei insbesondere zur Herstellung von Hefedonuts oder dgl. Gebäckstücken mit einer etwa kreisringförmigen Gestalt.

Zur Herstellung eines Teigrings ist es bekannt, ein Teigband in der gewünschten Endgröße zu erstellen und den Teigling dort auszustanzen. In diesem Fall entsteht jedoch sogenannter Rückteig in einer Größenordnung von bis zu 50%. Dieser Rückteig lässt sich nur schwer weiterverarbeiten, da ein sehr frischer Hefeteig nur einen geringen Anteil von Rückteig verträgt.

Es werden daher in der DE 10 2004 026 387 A1 ein Verfahren und eine Anlage vorgeschlagen, bei welcher eine Teigkugel in mehreren Schritten zunächst in eine kreisförmige Scheibe gedrückt und anschließend mit einem pilzartigen Stößel Teig verdrängt wird. Die Restmenge in der Mitte der Teigscheibe wird mit einem weiteren Stößel ausgestanzt. Gegenüber dem zuvor beschriebenen Verfahren fällt hierbei eine deutlich geringere Menge an Rückteig an. In der Praxis hat es sich bei dem System nach der DE 10 2004 026 387 A1 jedoch als schwierig erwiesen, insbesondere kleine Teiglinge genau zu zentrieren. Schon kleine Abweichungen vom Zentrum können so zu einem unregelmäßig geformten Außenring führen, was aus optischen Gründen und hinsichtlich des Verhaltens beim Backen als nachteilig empfunden wird.

Aufgabe der vorliegenden Erfindung ist es daher, ein Verfahren und eine Anlage zur Herstellung eines Teiglings, insbesondere eines schlusslosen Teigrings, bereitzustellen, welches bei möglichst geringem maschinellem Aufwand besonders zuverlässig die Herstellung eines gleichmäßig geformten Teiglings erlaubt.

Diese Aufgabe wird im Wesentlichen durch ein Verfahren mit den Schritten des Anspruchs 1 gelöst. Hierbei wird zur Herstellung bspw. eines Teigrings aus einem Teigling dieser zunächst zwischen zwei Membranen aufgenommen, von denen wenigstens eine konkav gewölbt ist. Vorzugsweise sind zur besseren Zentrierung des Teiglings beide Membrane konkav gewölbt, so dass der bspw. kugelförmige Teigling bereits durch die Ausgestaltung der Membrane in diesen zentriert wird. Erfindungsgemäß wird darauffolgend wenigstens eine der beiden Membrane auf ihre dem Teigling abgewandten Seite derart mit Druck beaufschlagt, dass diese Membran konvex gewölbt ist und die beiden Membrane zumindest in einem zentralen Bereich aneinander anliegen. Hierdurch wird unter Verdrängung und Umformung des Teiglings dieser in eine erste Form mit einer ringförmigen Vertiefung überführt, die radial außerhalb einer der beiden Membrane angeordnet ist. Mit anderen Worten wird der Teigling durch die Verwölbung wenigstens einer der beiden Membrane von der Mitte her nach außen gedrängt. Darauffolgend wird auf die erste Form eine Gegenform aufgebracht, die eine weitere Formgebung des schlusslosen Teigrings bewirkt. Das erfindungsgemäße Verfahren hat den Vorteil, dass die Umformung des bspw. kugelartigen Teiglings in einen schlusslosen Teigring in einer einzigen Bearbeitungsstation erfolgen kann, wobei die Nachbearbeitung mittels der Gegenform entweder ebenfalls in dieser einen Arbeitsstation erfolgt oder in einer benachbarten zweiten Arbeitsstation. Der maschinelle Aufwand ist jedenfalls gegenüber bekannten Verfahren erheblich verringert.

Die vorliegende Erfindung wird nachfolgend am Beispiel der Herstellung eines Teigrings näher erläutert. Erfindungsgemäß können jedoch auch beliebige anders geformte Teiglinge mit dem Verfahren bzw. der Anlage hergestellt werden, wenn die Form und/oder Gegenform entsprechend angepasst ist. Auf diese Weise lassen sich bspw. hörnchenartig gebogene oder wurstartige Teiglinge durch einfache Anpassung der Geometrie der Formen herstellen. Vor der Formgebung wird der noch umzuformende Teig nachfolgend als Teigling oder Teigkugel bezeichnet, ohne die Form des noch nicht in seine gewünschte Form gebrachten Teigs damit auf eine exakt kugelige Ausgestaltung zu beschränken.

Nach einer bevorzugten Ausführungsform des erfindungsgemäßen Verfahrens wird wenigstens eine der beide Membrane zur Aufnahme des Teiglings auf ihrer dem Teigling abgewandten Seite derart mit Unterdruck beaufschlagt, dass diese eine konkav gewölbte Schale zur Aufnahme und Zentrierung des Teiglings bildet. Durch das Anlegen von Unterdruck an eine oder beide Membrane lässt sich sehr rasch eine Vertiefung ausbilden, die die Teigling-Kugel, welche bspw. von einem Zuführband in die Anlage hereinfällt, zentriert.

Es hat sich als besonders vorteilhaft erwiesen, wenn wenigstens eine der beiden Membrane zur Verdrängung und Umformung des Teiglings auf ihrer dem Teigling abgewandten Seite derart pulsierend mit Druck beaufschlagt wird, dass der Teigling bspw. in einer annähernd stetigen Bewegung in die ringförmige Vertiefung der ersten Form überführt wird. Die pulsierende Bewegung der Membran fördert den Teig radial nach außen in die ringförmige Form. Zudem können hierdurch Ungenauigkeiten am Umfang ausgeglichen werden, so dass sich eine sehr einheitliche Form des Donuts oder dgl. ergibt. Zudem ist die Restmenge an Teig im Zentrum auf ein Minimum reduziert.

In Weiterbildung des Erfindungsgedankens ist es vorgesehen, dass einer Membran ein im Wesentlichen senkrecht zu der Membran verfahrbarer Stößel zugeordnet ist, durch dessen Betätigung die Membran unter Verdrängung und Umformung des Teiglings aus einer konkaven oder näherungsweisen ebenen Form in eine konvex gewölbte Form überführt wird. Dabei wird es besonders bevorzugt, wenn der zentrisch ausgefahrene Stößel die in Einbaulage untere Membran in eine konvexe bzw. kegelförmige oder pilzförmige vorgewölbte Form überführt, während gleichzeitig die in Einbaulage obere Membran pulsierend Druck auf den Teig ausübt.

Wenn die Gegenform ringförmig gestaltet ist, kann diese zur weiteren Formgebung des Teigrings wenigstens eine der Membranen umgreifend auf die erste Form aufgebracht werden, wodurch gleichzeitig ggf. vorhandener überschüssiger Teig abgeschnitten werden kann. Die evtl. abgeschnittene Restmenge von Teig kann zentrisch entsorgt werden.

Der derart geformte Teigring kann durch Abstreifen der äußeren Form nach unten abgerollt und auf ein Teigübergabeband abgesetzt werden. Hierzu lässt sich die erste Form, ggf. gemeinsam mit der Gegenform, nach der Verdrängung und Umformung des Teiglings in die ringförmige Vertiefung der ersten Form relativ zu wenigstens einer Membran in einer Richtung senkrecht zu dieser Membran verschieben.

Wenn das Verdrängen des Teiglings zu einem Teigring und die anschließende Konturierung mit der Gegenform in zwei unterschiedlichen Stationen stattfinden, wird der in der ersten Form aufgenommene Teigring aus der die obere Membran aufweisenden ersten Bearbeitungsstation in die zweite Bearbeitungsstation überführt, in welcher die Gegenform vorgesehen ist.

Die Aufgabe der Erfindung wird weiter durch eine Anlage nach Anspruch 8 gelöst. Eine Anlage zur Herstellung eines Teigrings aus einem Teigling, insbesondere nach dem zuvor beschriebenen Verfahren weist hierzu eine erste Form, die eine der Kontur des zu fertigenden Teigrings annähernd entsprechende nutartige Vertiefung aufweist, sowie zwei Membrane auf, von denen wenigstens eine durch eine zugeordnete Druckquelle zur Verdrängung eines Teiglings zwischen den Membranen nach außen und in die erste Form verformbar ist. Vorzugsweise weist eine erfindungsgemäße Anlage zur Herstellung eines Teigrings aus einem Teigling zwei Stationen zur Druckbeaufschlagung des Teiglings bzw. des Teigrings und einen von der ersten zur zweiten Station verfahrbaren Träger auf. Hierbei ist der Träger mit einer ersten (unteren) Membran, der ein im Wesentlichen senkrecht zu dieser verfahbarer Stößel zur Verformung dieser Membran zugeordnet ist, und einer ersten Form mit einer ringförmigen Vertiefung ausgestattet. Die erste Station weist eine zweite (obere) Membran sowie eine Einrichtung zur Verformung dieser Membran auf. Die Verformung der Membran kann insbesondere durch Beaufschlagung der zweiten Membran mit Druck und/oder Unterdruck erfolgen. Die zweite Station ist mit einer relativ zu der ersten Form und/oder relativ zu der ersten Membran verfahrbaren Gegenform ausgestattet. Die Größe der ersten Form und der Gegenform sind vorzugsweise derart aufeinander abgestimmt, dass zwischen diesen ein schlussloser Teigring der gewünschten Kontur ausgeformt werden kann.

Es wird besonders bevorzugt, wenn die Einrichtung zur Verformung der zweiten (oberen) Membran zur pulsierenden Druckbeaufschlagung dieser Membran sowie zur Erzeugung eines Unterdrucks auf der im Betrieb dem Teigling abgewandten Seite der Membran ausgestattet und eingerichtet ist. Diese Einrichtung zur Verformung der Membran kann bspw. eine geeignete Über- und/oder Unterdruckquelle für ein Fluid, insbesondere Luft, sein.

Um den aus dem Teigling geformten Teigring sowohl zwischen den beiden Membranen zu verdrängen als auch in der ersten Form zu konturieren, wird es bevorzugt, wenn die Größe des verformbaren Bereichs der zweiten (oberen) Membran derart gewählt ist, dass diese zweite Membran auf einen zentralen Bereich der ersten Membran und zumindest auf die ringförmige Vertiefung der ersten Form auflegbar ist. Mit anderen Worten kann die zweite Membran die erste Membran überdecken, so dass zumindest näherungsweise sämtlicher Teig zwischen den beiden Membranen radial nach außen verdrängt wird, und zusätzlich auch zumindest den Bereich der ersten Form überdecken, in welchem der Teigring nach der Verdrängung zwischen den beiden Membranen aufgenommen ist.

Der Träger kann zwischen der ersten Membran und der ersten Form eine bereichsweise kegelstumpfartige oder in anderer geeigneter Weise abgeschrägte oder abgerundete Hülse aufweisen. Über diese bspw. kegelstumpfartige Fläche der Hülse wird der Teigling auf seinem Weg radial nach außen in die ringförmige Vertiefung der ersten Form verdrängt. Die Hülse bewirkt, dass die erste Membran nicht durch die Gegenform beschädigt werden kann, wenn diese zusammen mit der ersten Form den Teigring ausformt. Dabei ist die erste Form radial außerhalb der ersten Membran angeordnet.

Das Entfernen überschüssigen Teigmaterials kann dadurch erleichtert werden, dass die ringförmige Vertiefung der ersten Form und/oder die Gegenform eine der Hülse zugewandte, innere ringförmige Schneidkante aufweisen.

Die erfindungsgemäße Anlage kann Bestandteil einer Donut-Fertigungsanlage sein und hierzu zusätzlich eine Teigportioniereinrichtung (Teigteiler), eine Gärstation und/oder eine Backstation aufweisen. Darüber hinaus können geeignete Fördereinrichtungen, bspw. Förderbänder, vorgesehen sein, um den Teig, den Teigling oder den daraus geformten Teigring zwischen einzelnen Bearbeitungsstationen zu transportieren.

Die Erfindung wird nachfolgend anhand eines Ausführungsbeispiels und unter Bezugnahme auf die Zeichnung näher erläutert. Dabei bilden alle beschriebenen und/oder bildlich dargestellten Merkmale einzeln oder in beliebiger sinnvoller Kombination den Gegenstand der Erfindung unabhängig von ihrer Zusammenfassung in den Ansprüchen oder deren Rückbeziehung.

Es zeigen schematisch:
- Fig. 1: in Schnittansicht eine erfindungsgemäße Anlage vor der Formgebung/Verdrängung eines Teiglings,
- Fig. 2: in Schnittansicht die Anlage nach Fig. 1 während der Verdrängung des Teiglings in eine erste Form und
- Fig. 3: in Schnittansicht die Anlage nach Fig. 1 während der abschließenden Formgebung des Teigrings.
Die in den Figuren dargestellte Anlage 1 zur Herstellung eines schlusslosen Teigrings weist im Wesentlichen einen Träger 2, eine erste Bearbeitungsstation 3 und eine zweite Bearbeitungsstation 4 auf, wobei der Träger 2 zwischen den beiden Arbeitsstationen 3, 4 verfahrbar ist.

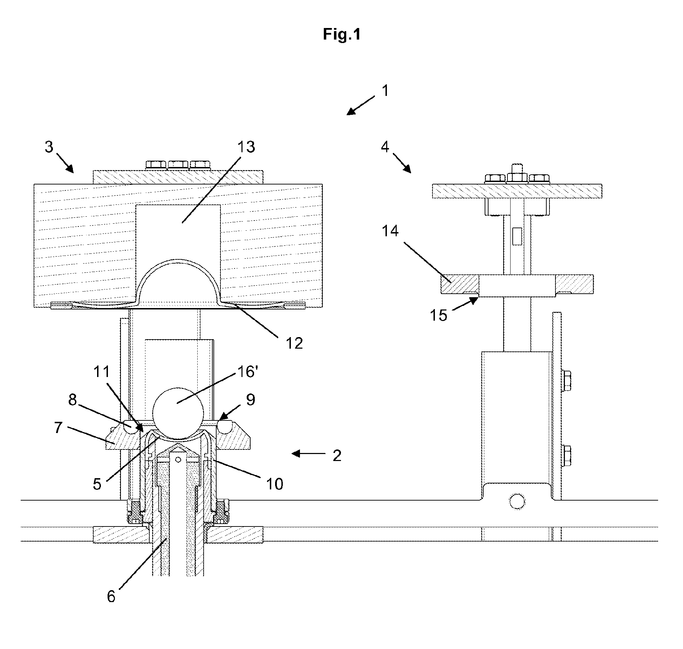

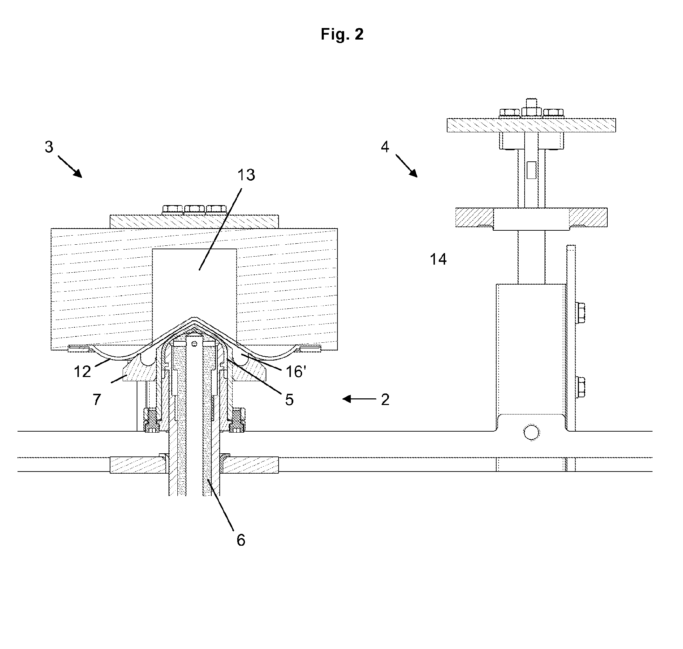

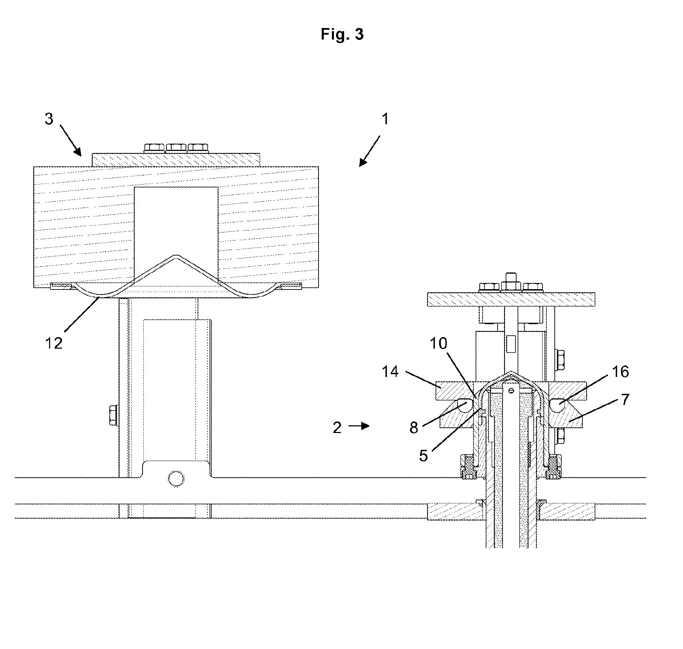

Der Träger 2 ist mit einer ersten Membran 5 versehen, der einem Stößel 6 derart zugeordnet ist, dass die erste Membran 5 durch eine Hubbewegung des Stößels 6 aus einer Form, in welcher die Membran 5 konkav gewölbt ist (Figur 1), reversibel in eine im Wesentlichen konvexe Form (Figuren 2 und 3) überführt werden kann. In der dargestellten Ausführungsform ist der Stößel 6 hydraulisch oder pneumatisch betätigbar.

Weiter weist der Träger 2 eine erste Form 7 auf, die im Wesentlichen ringförmig gestaltet ist und radial außerhalb der ersten Membran 5 angeordnet ist. Die erste Form 7 weist eine ringförmige Vertiefung 8 auf, die teilweise der Kontur des herzustellenden Teigrings entspricht. Auf ihrer radial inneren Seite ist die ringförmige Vertiefung 8 mit einer Schneidkante 9 versehen.

Zwischen der ersten Form 7 und der ersten Membran 5 ist in der dargestellten Ausführungsform eine Hülse 10 vorgesehen, die eine etwa kegelstumpfförmige, an den Verlauf der konvex gewölbten Membran 5 angepasste obere Fläche 11 aufweist. Die erste Form 7 kann entlang der Hülse 10 relativ zu der ersten Membran 5 in Höhenrichtung des Trägers bewegt werden.

Die erste Station 3 weist eine zweite Membran 12 auf, die auf ihrer in den Figuren oberen Seite mit Unterdruck oder mit Überdruck beaufschlagt werden kann. Hierzu ist oberhalb der zweiten Membran 12 ein mit einer geeigneten Druckluftquelle bzw. Luftsenke verbindbare Luftraum (Kammer) 13 vorgesehen. Die Druckluftquelle ist dabei vorzugsweise so ausgestaltet, dass die zweite Membran 12 pulsierend mit Überdruck beaufschlagt werden kann.

Wie aus einem Vergleich der Figuren 1, 2 und 3 ersichtlich ist, wird die zweite Membran 12 etwa halbkugelförmig konkav verformt, wenn in dem Luftraum 13 ein Unterdruck anliegt. Wenn dagegen ein Überdruck anliegt, kann die zweite Membran 12 auf die erste Membran 5 bzw. die erste Form 7 angelegt werden. Die Größe der zweiten Membran 12 ist dabei in der Art bemessen, dass die zweite Membran 12 sowohl über die erste Membran 5 als auch über den Bereich der ringförmigen Vertiefung 8 der ersten Form 7 gelegt werden kann. Wenn in dem Luftraum 13 kein Über- oder Unterdruck anliegt, nimmt die Membran 12 eine im Wesentlichen ebene, plattenförmige Form an (Figur 3). Die erste Station 3 ist in Höhenrichtung relativ zu dem ersten Träger 2 verfahrbar.

Die zweite Station 4 ist vorzugsweise benachbart zu der ersten Station 3 angeordnet, so dass der Träger 2 rasch zwischen den beiden Stationen verfahrbar ist. In der zweiten Station 4 ist eine Gegenform 14 vorgesehen, welche auf ihrer radial inneren Seite eine ringförmige Schneidkante 15 aufweist. Die Gegenform 14 ist in der zweiten Station 4 in Höhenrichtung verfahrbar, damit sie, wie in Figur 3 dargestellt, nach unten über die Hülse 10 geschoben werden kann, so dass die Gegenform 14 gemeinsam mit der ringförmigen Vertiefung 8 der ersten Form 7 einen geschlossenen, im Querschnitt kreisförmigen Kanal zur Ausformung eines schlusslosen Teigrings bildet. Gleichzeit lässt sich durch das Absenken der Gegenform 14 mit der Schneidkante 15 etwaiges überschüssiges Teigmaterial abscheren.

Das erfindungsgemäße Verfahren zur Herstellung eines schlusslosen Teigrings 16 aus einem etwa kugelförmigen Teigling 16' wird nachfolgend näher erläutert: Zu Beginn des Prozesses wird der Stößel 6 des Trägers 2 in der Figur nach unten verfahren, wodurch sich die erste Membran 5 in Figur 1 gezeigt konkav wölbt und eine schalenförmige Aufnahme für einen Teigling 16' bildet, der bspw. über eine geeignete Zufuhreinrichtung aus einem Teigteiler in die durch die Membran 5 gebildete Aufnahme fällt. Die konkave Form der ersten Membran 5 dient dabei dazu, den Teigling 16' innerhalb des Trägers 2 zu zentrieren. Der Träger 2 wird dann unter die erste Station 3 verfahren, in welcher die zweite Membran 12 durch Anlegen von Unterdruck in dem Luftraum 13 in eine ebenfalls konkav gewölbte Form gebracht wird. Der Teigling 16' lässt sich somit zwischen den beiden konkav gewölbten Membranen 5, 12 zentrieren, wenn die zweite Membran 12 auf den Träger 2 abgesenkt wird.

Zur Verformung des Teigling 16' wird anschließend der Stößel 6 in der Figur nach oben verfahren, wodurch die erste Membran 5 etwa konvex vorgewölbt wird. Gleichzeitig oder darauffolgend wird die dem Teigling 16' abgewandte Seite der zweiten Membran 12 insbesondere pulsierend mit Überdruck beaufschlagt, so dass sich die zweite Membran 12 bereichsweise vorwölbt und den Teigling 16' auf den Zwischenraum zwischen den beiden Membranen 5, 12 radial nach außen verdrängt. Durch die pulsierende Druckbeaufschlagung fließt der Teigling 16' stetig über die erste Membran 5, die abgeschrägte obere Fläche 11 der Hülse 10 in die ringförmige Vertiefung 8 der ersten Form 7.

Wenn der Teig im Wesentlichen vollständig zwischen den beiden Membranen 5, 12 radial nach außen in die ringförmige Vertiefung 8 verdrängt ist, wird die erste Station 3 angehoben und der Träger 2 zu der zweiten Station 4 verfahren. Die Gegenform 14 der zweiten Station 4 befindet sich zunächst in einer im Vergleich zu der Position in Figur 3 angehobenen Stellung, so dass der Träger 2 unter die Gegenform 14 verfahren werden kann. Darauffolgend wird die Gegenform 14 in ihre in Figur 3 gezeigte Position abgesenkt, wobei die Schneidkante 15 der Gegenform 14 an der Außenfläche der Hülse 10 entlang streift und dabei etwaigen überschüssigen Teig abschneidet. Durch die Anlage der Gegenform 14 an der ersten Form 7 wird in der ringförmigen Vertiefung 8 der Teigring 16 weiter in seine gewünschte Form gebracht. Durch Abstreifen der ersten Form 7 kann der Teigring 16 nach unten abgerollt und auf ein Teigübergabeband (nicht dargestellt) abgesetzt werden. Der durch die Schneide 15 der Gegenform abgeschnittene Rückteig kann zentrisch entsorgt werden.

Abweichend von der dargestellten Ausführungsform ist es grundsätzlich auch möglich, die zweite Membran 12 und die Gegenform 14 in einer einzigen Station vorzusehen. Weiter ist es auch möglich, den Träger 2 ortsfest in der Anlage 1 zu belassen, während sich die Stationen 2, 3 relativ zu diesem bewegen.

### Bezugszeichen:

- 1: Anlage
- 2: Träger
- 3: erste Station
- 4: zweite Station
- 5: erste Membran
- 6: Stößel
- 7: erste Form
- 8: ringförmige Vertiefung
- 9: Schneidkante
- 10: Hülse
- 11: kegelstumpfförmige Fläche
- 12: zweite Membran
- 13: Luftraum
- 14: Gegenform
- 15: Schneidkante

## Patentansprüche

1. Verfahren zur Herstellung eines definiert geformten Teiglings, insbesondere eines Teigrings, aus einer Teigkugel mit folgenden Schritten:
a) Aufnehmen der Teigkugel (16') zwischen zwei Membranen (5, 12), von denen wenigstens eine konkav gewölbt ist,
b) Druckbeaufschlagung wenigstens einer der beiden Membrane (5, 12) auf ihrer der Teigkugel (16') abgewandten Seite derart, dass die Membran (5) konvex gewölbt ist und die Membrane (5, 12) zumindest in einem zentralen Bereich aneinander anliegen, wodurch unter Verdrängung und Umformung der Teigkugel (16') dieser in eine ersten Form (7) mit einer bspw. ringförmigen Vertiefung (8) überführt wird, die radial außerhalb einer der Membranen (5) angeordnet ist,
c) Aufbringen einer Gegenform (14) auf die erste Form (7) zur weiteren Formgebung des Teiglings, insbesondere eines schlusslosen Teigrings (16).

2. Verfahren nach Anspruch 1, **dadurch gekennzeichnet, dass** wenigstens eine der beiden Membrane (5, 12) zur Aufnahme der Teigkugel (16') auf ihrer der Teigkugel (16') abgewandten Seite derart mit Unterdruck beaufschlagt wird, dass diese eine konkav gewölbte Schale zur Aufnahme und Zentrierung der Teigkugel (16') bildet.

3. Verfahren nach Anspruch 1 oder 2, **dadurch gekennzeichnet, dass** wenigstens eine der beiden Membrane (5, 12) zur Verdrängung und Umformung der Teigkugel (16') auf ihrer der Teigkugel (16') abgewandten Seite derart pulsierend mit Druck beaufschlagt wird, dass die Teigkugel (16') in einer annähernd stetigen Bewegung in die ringförmige Vertiefung (8) der ersten Form (7) überführt wird.

4. Verfahren nach einem der vorhergehenden Ansprüche, **dadurch gekennzeichnet, dass** einer Membran (5) ein im Wesentlichen senkrecht zu der Membran (5) verfahrbarer Stößel (6) zugeordnet ist, durch dessen Betätigung die Membran (5) unter Verdrängung und Umformung der Teigkugel (16') aus einer konkaven oder näherungsweise ebenen Form in eine konvex gewölbte Form überführt wird.

5. Verfahren nach einem der vorhergehenden Ansprüche, **dadurch gekennzeichnet, dass** die Gegenform (14) ringförmig gestaltet ist und zur weiteren Formgebung des Teigrings (16) wenigstens eine Membran (5) umgreifend auf die erste Form (7) aufgebracht wird, wobei ggf. überschüssiger Teig abgeschnitten wird.

6. Verfahren nach einem der vorhergehenden Ansprüche, **dadurch gekennzeichnet, dass** die erste Form (7), ggf. gemeinsam mit der Gegenform (14), nach der Verdrängung und Umformung der Teigkugel (16') in die bspw. ringförmige Vertiefung (8) der ersten Form (7) relativ zu wenigstens einer Membran (5) in einer Richtung senkrecht zu dieser Membran (5) verschoben wird.

7. Verfahren nach einem der vorhergehenden Ansprüche, **dadurch gekennzeichnet, dass** der in der erste Form (7) aufgenommene Teigling (16) vor Schritt c) aus einer ersten, eine obere Membran (12) aufweisenden Station (3) in eine zweite, die Gegenform (14) aufweisende Station (4) überführt wird.

8. Anlage zur Herstellung eines Teiglings, insbesondere eines Teigrings, aus einer Teigkugel, insbesondere mit einem Verfahren nach einem der vorhergehenden Ansprüche, mit einer ersten Form (7), die eine der Kontur des zu fertigenden Teiglings (16) annähernd entsprechende nutartige Vertiefung (8) aufweist, sowie mit zwei Membranen (5, 12), von denen wenigstens eine durch eine zugeordnete Druckquelle (6, 13) zur Verdrängung einer Teigkugel (16') zwischen den Membranen (5, 12) nach außen und in die erste Form (5) verformbar ist.

9. Anlage nach Anspruch 8 mit zwei Stationen (3, 4) zur Druckbeaufschlagung der Teigkugel (16') bzw. des Teiglings (16) und einem von der ersten zur zweiten Station verfahrbaren Träger (2), **dadurch gekennzeichnet, dass** der Träger (2) eine erste Membran (5), der ein im Wesentlichen senkrecht zu dieser verfahrbarer Stößel (6) zur Verformung dieser Membran (5) zugeordnet ist, und eine erste Form (7) mit einer bspw. ringförmigen Vertiefung (8) aufweist,
dass die erste Station (3) eine zweite Membran (12) und eine Einrichtung (13) zur Verformung dieser Membran (12), insbesondere durch Beaufschlagung der zweiten Membran (12) mit Druck und/oder Unterdruck, aufweist,
und dass die zweite Station (4) eine relativ zu der ersten Form (7) und/oder der ersten Membran (5) verfahrbare Gegenform (14) aufweist.

10. Anlage nach Anspruch 8 oder 9, **dadurch gekennzeichnet, dass** die Einrichtung zur Verformung der zweiten Membran (12) zur pulsierenden Druckbeaufschlagung der zweiten Membran (12) sowie zur Erzeugung eines Unterdrucks auf der im Betrieb der Teigkugel (16') abgewandten Seite dieser Membran (12) ausgestattet ist.

11. Anlage nach einem der Ansprüche 8 bis 10, **dadurch gekennzeichnet, dass** die Größe des verformbaren Bereichs der zweiten Membran (12) derart gewählt ist, dass die zweite Membran (12) auf einen zentralen Bereich der ersten Membran (5) und zumindest die bspw. ringförmige Vertiefung (8) der ersten Form (7) auflegbar ist.

12. Anlage nach einem der Ansprüche 8 bis 11, **dadurch gekennzeichnet, dass** die erste Form (7) radial außerhalb der ersten Membran (5) angeordnet ist.

13. Anlage nach einem der Ansprüche 8 bis 12, **dadurch gekennzeichnet, dass** der Träger (2) zwischen der ersten Membran (5) und der ersten Form (7) eine bereichsweise kegelstumpfartige Hülse (10, 11) aufweist.

14. Anlage nach Anspruch 12 und 13, **dadurch gekennzeichnet, dass** die ringförmige Vertiefung (8) der ersten Form (7) und/ oder die Gegenform (14) eine der Hülse (10, 11) zugewandte, innere ringförmige Schneidkante (9, 15) aufweist.

15. Anlage nach einem der Ansprüche 8 bis 14 als Bestandteil einer Donut-Fertigungsanlage, die zusätzlich eine Teigportioniereinrichtung, eine Gärstation und/oder eine Backstation aufweist.
